# EUROPÄISCHE PATENTSCHRIFT

(11) **EP 2 154 027 B1**
(45) Veröffentlichungstag und Bekanntmachung des Hinweises auf die Patenterteilung: **29.06.2016**
(21) Anmeldenummer: 09009964.9
(22) Anmeldetag: 01.08.2009
(51) Int. Cl.: B60H 1/00, B60R 7/04

(54) **Mittelkonsole für ein Kraftfahrzeug**
Centre console for a motor vehicle
Console moyenne pour un véhicule automobile

(30) Priorität: 08.08.2008 DE 102008037070
(43) Veröffentlichungstag der Anmeldung: 17.02.2010
(60) Teilanmeldung: 15158241.8
(73) Patentinhaber: Bayerische Motoren Werke Aktiengesellschaft, 80809 München (DE)
(72) Erfinder: Schmid, Bernhard, 85737 Ismaning (DE)
(74) Vertreter: Günther, Hans Peter

(56) Entgegenhaltungen:
- EP-A- 1 403 141
- DE-A1- 4 215 136
- DE-A1- 10 014 728
- DE-A1- 19 935 270
- JP-A- 57 158 140
- JP-U- 56 158 342

## Beschreibung

Die vorliegende Erfindung betrifft eine Mittelkonsole für ein Kraftfahrzeug, mit einem Boden, einer vorderen Wand und einer hinteren Wand.
Mittelkonsolen sind heutzutage in Kraftfahrzeugen z. B. als Mittelarmlehne mit integriertem Ablagefach Gang und Gäbe. Wenn in einem solchen Fahrzeug beispielsweise als Sonderausstattung eine Fondbelüftung verbaut ist, wird die Luft durch einen Kanal in der Mittelkonsole von einem vorderen Luftkanal zu einem hinteren Fondgrill o. dgl. geführt. In diesem Fall muss also eine Luftführung in der Mittelkonsole vorgesehen sein. Wird dagegen beispielsweise in der Basisausstattung keine Fondbelüftung verbaut, wird auch keine Luftführung benötigt, so dass in diesem Fall eine Mittelkonsole ohne Luftführung benötigt wird. Je nach gewünschter Ausstattung müssen daher unterschiedliche Mittelkonsolen verbaut werden. Dies erfordert einen erhöhten finanziellen Aufwand für die Herstellung und Lagerung der unterschiedlichen Ausführungen der Mittelkonsole sowie eine erhöhte Sorgfalt beim Einbau, da je nach Ausstattung auf die richtige Zuordnung der betreffenden Mittelkonsole geachtet werden muss.

Aus der JP 56158342 U ist ein als Mittelkonsole ausgebildetes Trägerbauteil bekannt, das an seinem vorderen Ende mindestens eine Eintrittsöffnung aufweist, die mit einem Gebläse verbunden ist. Ferner weist das Trägerbauteil an seinem hinteren Ende Austrittsöffnungen auf. Das Trägerbauteil weist einen von der vorderen Eintrittsöffnung bis zu den hinteren Austrittsöffnungen durchgehenden Luftführungskanal auf. In einem Zwischenabschnitt des Trägerbauteils ist eine Vertiefung oder ein Hohlraum ausgebildet, der den Luftführungskanal unterbricht. An dem Zwischenabschnitt sind in einer Wand Durchbrüche ausgebildet, aus denen die aus der vorderen Eintrittsöffnung herkommende Luft austreten kann. Auf der dazu gegenüberliegenden Seite des Zwischenabschnitts sind ebenfalls Durchbrüche vorgesehen, die als Eintrittsöffnungen für den Luftführungskanalabschnitt zu den hinteren Austrittsöffnungen dienen. In diesen Zwischenabschnitt des Trägerbauteils ist ein Ablagefach mit einem Deckel angeordnet, das an seiner vorderen Wand und an seiner hinteren Wand, in Längsrichtung des Trägerbauteils gesehen, Durchbrüche aufweist. Diese Ablagefach-Durchbrüche stimmen mit den Durchbrüchen in dem Trägerbauteil überein, so dass ein Innenraum des Ablagefaches mit temperierter Luft durchströmt werden kann.

Aus der EP 1 403 141 ist eine Mittelkonsole für ein Kraftfahrzeug bekannt, die einen Boden, eine vordere Wand und eine hintere Wand aufweist, wobei in der vorderen Wand und in der hinteren Wand jeweils im bodennahen Bereich ein Durchbruch vorgesehen ist. Der Durchbruch an der vorderen Wand ist mit einem Luftzuführstutzen verbunden. Der Durchbruch an der hinteren Wand führt beispielsweise in einen Fondbereich eines Kraftfahrzeuges. Das in der Mittelkonsole integrierte Ablagefach ist durch ein Verschlußelement in Form eines Deckels verschließbar. Die Temperatur des Innenraumes des Ablagefaches kann durch die von außen zugeführte, temperierte Luft gekühlt oder erwärmt werden.

Aus der DE 100 14 728 ist ein Behälter bekannt, der als eine Klimabox ausgebildet sein kann. Zur Kühlung oder zum Erwärmen der in der Klimabox befindlichen Gegenstände, wie Getränkeflaschen oder Lebensmittel, ist der Behälter an seiner vorderen Wand und an seiner hinteren Wand mit verschließbaren Durchbrüchen versehen, die ein Durchströmen von Luft durch den Behälter ermöglichen. Die durch die Klimabox durchströmende Luft ist in der Regel klimatisiert und/oder weist eine wählbare Temperatur auf. Der Behälter ist in einem Zwischenraum lösbar angeordnet, der zwischen einem Dom und einer Mittelkonsole vorgesehen ist. Der Dom ist ein Bereich, der sich in der Regel mittig von einem Armaturenbrett bis zu einem Boden einer Fahrgastzelle erstreckt.

Aus der JP 57 158140 ist eine Mittelkonsole bekannt, die ein mit einem Deckel verschließbares Ablagefach aufweist. Bei dem Ablagefach ist ein als ebene Platte ausgebildeter Zwischenboden aus einer mittleren Position, in eine untere Position und umgekehrt montierbar. Der Zwischenboden trennt das Ablagefach in einen oberen Bereich und in einen unteren Bereich ab. Im unteren Bereich befindet sich der Zwischenboden oberhalb einer verschiebbaren Schublade. Der Zwischenboden dient zur Einstellung des gewünschten Stauraumes im Innenraum des Ablagefaches. Die Schublade weist eine Wand auf, die sich außerhalb des Ablagefaches befindet, wobei die Wand einen Durchbruch verschließt, der in dem Ablagefach ausgebildet ist.

Aus der DE 199 35 270 ist eine Mittelkonsole für ein Kraftfahrzeug mit einem belüfteten Ablagefach bekannt. Das Ablagefach ist über mindestens einen Lufteinlass oder Durchbruch an mindestens einem Luftkanal für die Belüftung des Fahrzeugfonds über einen Zusatzkanal angeschlossen. An einer vorderen Wand des Ablagefaches ist ein Durchbruch vorgesehen, der durch einen Schieber oder dergleichen geöffnet oder geschlossen werden kann.

Aus der DE 4215136 ist ein tragbarer Kühlbehälter bekannt, der eine Lufteintrittsöffnung und eine Luftaustrittsöffnung aufweist. Die Lufteintrittsöffnung des Kühlbehälters ist mit einer Luftaustrittsöffnung einer Klimaanlage des Kraftfahrzeuges verbindbar. Durch die durch den Kühlbehälter hindurchströmende Luft ist über Wärmekonvektion ein Innenraum des Kühlbehälters und damit der darin befindlichen Gegenstände über Wärmekonvektion temperierbar. Über beispielsweise eingeklipste Aufbewahrungsfächer kann der Innenraum des Kühlbehälters an seinem vorderen Bereich unterteilt werden. Die Aufbewahrungsfächer sind sowohl von der Lufteintrittsöffnung als auch von der dazu beabstandeten Luftaustrittsöffnung so weit entfernt, dass kein Verschluss über die Aufbewahrungsfächer möglich ist.

Es ist daher Aufgabe der vorliegenden Erfindung, die bekannte Mittelkonsole hinsichtlich Kosten- und Einbauaufwand zu verbessern.

Erfindungsgemäß wird diese Aufgabe durch eine Mittelkonsole gemäss Anspruch 1 gelöst.

Nach einer vorteilhaften Weiterbildung, die aber nicht im Schutzbereich der Ansprüche liegt, ist es möglich wahlweise ein Verschlusselement, welches die Durchbrüche verschliesst, oder das Freigabeelement einzusetzen.

Infolge dieser Ausgestaltung ist es möglich, ein und dieselbe Mittelkonsole sowohl in der Basisausstattung ohne Fondbelüftung als auch in der Sonderaustattung mit Fondbelüftung zu verbauen. Ob eine Luftführung durch die Mittelkonsole realisiert werden soll, hängt einzig und allein von dem eingesetzten Element ab. In der Basisausstattung wird das Verschlusselement verbaut, welches die Durchbrüche verschließt, und in der Sonderausstattung wird das Freigabeelement verbaut, welches die Durchbrüche freigibt. Dadurch kann sowohl der herstellerische als auch der konstruktive Aufwand beim Einbau minimiert werden. Selbst der Einbau eines falschen Elementes kann jederzeit ohne großen Aufwand rückgängig gemacht werden. Da das Element jederzeit auch wieder entfernt bzw. gegen ein anderes ausgetauscht werden kann, sind eine leichte Reinigung der Luftführung innerhalb der Mittelkonsole sowie eine Nachrüstung einer Fondbelüftung jederzeit möglich. Auch der Einbau eines flachen Lüftergebläses in die Luftführung innerhalb der Mittelkonsole ist nachträglich realisierbar.

Die Unteransprüche beinhalten vorteilhafte Weiterbildungen und Ausgestaltungen der erfindungsgemäßen Mittelkonsole.

Nach einer vorteilhaften aber ausserhalb des Schutzbereichs liegenden Weiterbildung ist das Verschlusselement als freigeformte Auflagefläche für die Ablage von Gegenständen, vorzugsweise in Z-Richtung, oder als im Wesentlichen ebene Platte mit einer vorderen und einer hinteren Seitenwandung ausgebildet, wobei die Platte auf dem Boden der Mittelkonsole aufliegt und die vordere bzw. hintere Seitenwandung den Durchbruch in der vorderen bzw. hinteren Wand der Mittelkonsole abdeckt.

Alternativ kann das Verschlusselement als nach oben offener Kasten ausgebildet sein, dessen Boden auf dem Boden der Mittelkonsole aufliegt und dessen vordere bzw. hintere Seitenwandung den Durchbruch in der vorderen bzw. hinteren Wand der Mittelkonsole abdeckt.

Nach einer weiteren ebenfalls ausserhalb des Schutzbereichs liegenden Alternative kann das Verschlusselement auch als Rahmen ausgebildet sein, der auf dem Boden der Mittelkonsole aufliegt und dessen vordere bzw. hintere Seitenwandung den Durchbruch in der vorderen bzw. hinteren Wand der Mittelkonsole abdeckt.

Das Verschlusselement nach allen drei Ausgestaltungsvarianten kann leicht hergestellt werden und ist ohne Schwierigkeiten zu verbauen.

Erfindungsgemäss ist das Freigabeelement als freigeformte Auflagefläche oder als im Wesentlichen ebene Platte ausgebildet, die mindestens auf der Höhe der Oberkante der Durchbrüche liegt, so dass unterhalb des Freigabeelementes ein Luftführungskanal ausgebildet wird, der die Durchbrüche in der vorderen und der hinteren Wand der Mittelkonsole miteinander verbindet.

Bei der Ausgestaltung als freigeformte Auflagefläche beginnt diese an der Oberkante des vorderen Durchbruchs und endet an der Oberkante des hinteren Wanddurchbruchs. Die Form dazwischen ist frei zu gestalten.

Für eine exakte Positionierung soll sich das Freigabeelement vorteilhafterweise auf einer vorzugsweise umlaufenden Konsole abstützen, welche mindestens auf der Höhe der Oberkante der Durchbrüche in der Mittelkonsole angeordnet ist.

Auf der Unterseite des Freigabeelementes sind Abstützungen vorgesehen, welche sich auf dem Boden der Mittelskonsole abstützen.

Diese Abstützungen können vorteilhafterweise gleichzeitig als Luftleitrippen ausgebildet sein.

Besonders einfach lassen sich das Verschlusselement und das Freigabeelement im Einkomponenten-, Zweikomponentenverfahren oder als Monocompound herstellen.

Weitere Einzelheiten, Merkmale und Vorteile der Erfindung ergeben sich aus der nachfolgenden Beschreibung anhand der Zeichnungen. Es zeigen:
- Figur 1: eine Mittelkonsole in der Draufsicht,
- Figur 2: eine mögliche Ausführungsform eines Verschlusselementes,
- Figur 3: die Mittelkonsole mit eingesetztem Verschlusselement,
- Figur 4: eine mögliche Ausführungsform eines Freigabeelementes,
- Figur 5: die erfindungsgemäße Mittelkonsole mit eingesetztem Freigabeelement, und
- Figur 6: die erfindungsgemäße Mittelkonsole gemäß Figur 5 in einer Seitenansicht.

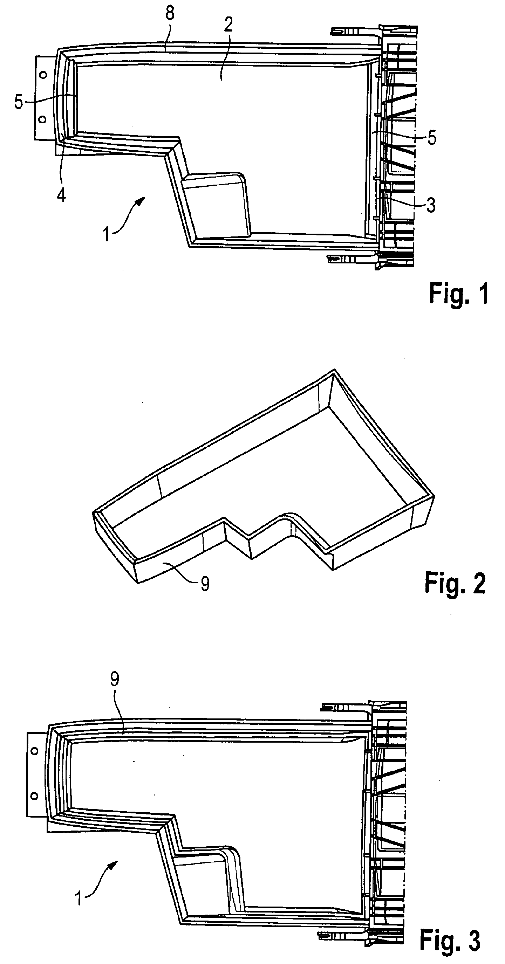

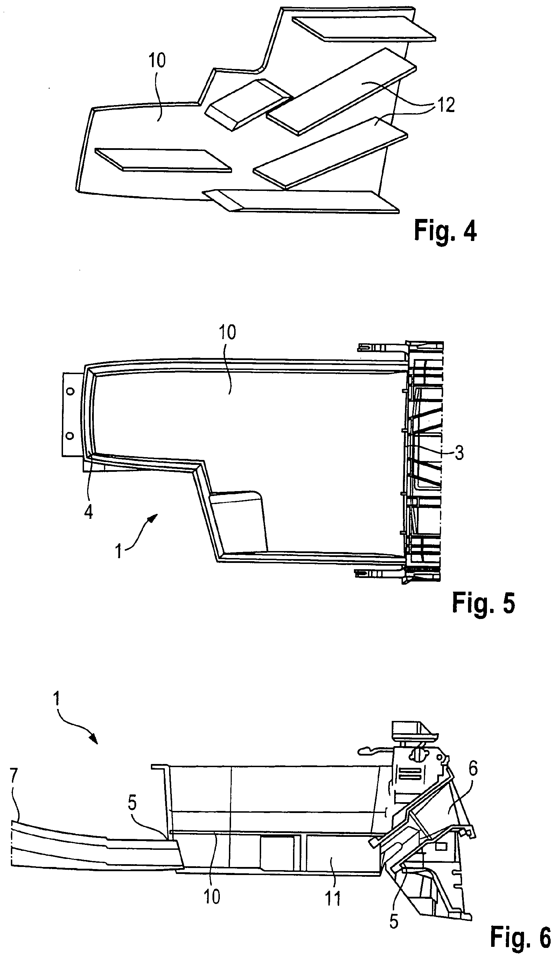

In Figur 1 ist eine Mittelkonsole 1 für ein Kraftfahrzeug in der Draufsicht dargestellt, die beispielsweise als Mittelarmlehne mit Ablagefach ausgebildet ist. Die Mittelkonsole 1 weist einen Boden 2, eine vordere Wand 3 und eine hintere Wand 4 auf. In der vorderen Wand 3 und in der hinteren Wand 4 ist jeweils in deren bodennahem Bereich ein Durchbruch 5 vorgesehen, der für eine Fondbelüftung mit einem vorderen Luftkanal 6 und einem hinteren Fondgrill 7 verbunden werden kann (Figur 6).

In der Mittelkonsole 1 ist eine vorzugsweise umlaufende Konsole 8 vorgesehen, welche mindestens auf der Höhe der Oberkante der Durchbrüche 5 in der vorderen bzw. hinteren Wand 3, 4 der Mittelkonsole 1 angeordnet ist.

Je nachdem, ob das Kraftfahrzeug mit oder ohne Fondbelüftung ausgestattet sein soll, kann in die Mittelkonsole ein Verschlusselement 9 (Figur 2), das die Durchbrüche 5 verschließt, oder ein Freigabeelement 10 (Figur 4), das die Durchbrüche 5 freigibt, eingesetzt werden.

Eine mögliche Ausführungsform eines Verschlusselementes 9 ist in Figur 2 dargestellt. Gemäß dieser Ausführungsform wird das Verschlusselement 9 von einem Rahmen gebildet, dessen Höhe zumindest geringfügig höher ist als die Höhe der Durchbrüche 5 in der vorderen bzw. hinteren Wand 3, 4 der Mittelkonsole 1.

Alternativ kann das Verschlusselement 9 auch als im Wesentlichen ebene Platte mit einer vorderen und einer hinteren Seitenwandung ausgebildet sein, wobei die Platte auf dem Boden 2 der Mittelkonsole 1 aufliegt und die vordere bzw. hintere Seitenwandung den Durchbruch 5 in der vorderen bzw. hinteren Wand 3, 4 der Mittelkonsole 1 abdeckt.

Nach einer weiteren Alternative kann das Verschlusselement 9 auch als nach oben offener Kasten ausgebildet sein, dessen Boden auf dem Boden 2 der Mittelkonsole 1 aufliegt und dessen vordere bzw. hintere Seitenwandung den Durchbruch 5 in der vorderen bzw. hinteren Wand 3, 4 der Mittelkonsole 1 abdeckt.

Wenn das Verschlusselement 9 in die Mittelkonsole 1 eingesetzt ist, verschließt es die Durchbrüche 5 in der vorderen bzw. hinteren Wand 3, 4 der Mittelkonsole 1, wie in Figur 3 zu sehen ist.

Eine mögliche Ausführungsform eines Freigabeelementes 10 ist in Figur 4 dargestellt. Gemäß dieser Ausführungsform ist das Freigabeelement 10 von einer im Wesentlichen ebenen Platte gebildet, die mindestens auf der Höhe der Oberkante der Durchbrüche 5 liegt, so dass unterhalb des Freigabeelementes 10 ein Luftführungskanal 11 ausgebildet wird, der die Durchbrüche 5 in der vorderen und der hinteren Wand 3, 4 der Mittelkonsole 1 miteinander verbindet (Figur 6). Dabei kann sich das Freigabeelement 10 auf der in der Mittelkonsole 1 umlaufenden Konsole 8 abstützen.

Weiterhin sind auf der Unterseite des Freigabeelementes 10 Abstützungen 12 vorgesehen ist, welche sich auf dem Boden 2 der Mittelskonsole 1 abstützen. Diese Abstützungen 12 sind als Luftleitrippen ausgebildet, um den Luftstrom zu kanalisieren.

Je nach eingesetztem Element 9, 10 kann somit die erfindungsgemäße Mittelkonsole 1 durch eine einfache Maßnahme mit einem Luftführungskanal 11 versehen werden.

Das Verschlusselement 9 und das Freigabeelement 10 lassen sich in einfacher Weise im Einkomponenten-, Zweikomponentenverfahren oder als Monocompound herstellen.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Mittelkonsole
- 2: Boden
- 3: vordere Wand
- 4: hintere Wand
- 5: Durchbruch
- 6: vorderer Luftkanal
- 7: Fondgrill
- 8: Konsole
- 9: Verschlusselement
- 10: Freigabeelement
- 11: Luftführungskanal
- 12: Abstützungen

## Patentansprüche

1. Mittelkonsole (1) für ein Kraftfahrzeug, mit einem Boden (2), einer vorderen Wand (3) und einer hinteren Wand (4), wobei in der vorderen Wand (3) und in der hinteren Wand (4) jeweils im bodennahen Bereich ein Durchbruch (5) vorgesehen ist, welcher mit einer Luftführung für eine Belüftung eines Fondbereichs des Kraftfahrzeuges verbindbar ist,
wobei das Freigabeelement (10) als freigeformte Auflagefläche oder als im Wesentlichen ebene Platte ausgebildet ist, die mindestens auf der Höhe der Oberkante der Durchbrüche (5) liegt, so dass unterhalb des Freigabeelementes (10) ein Luftführungskanal (11) ausgebildet wird, der die Durchbrüche (5) in der vorderen und der hinteren Wand (3, 4) der Mittelkonsole (1) miteinander verbindet,
wobei sich das Freigabeelement (10) auf einer vorzugsweise umlaufenden Konsole (8) abstützt, welche mindestens auf der Höhe der Oberkante der Durchbrüche (5) in der Mittelkonsole (1) angeordnet ist,
wobei auf der Unterseite des Freigabeelementes (10) Abstützungen (12) vorgesehen ist, welche sich auf dem Boden (2) der Mittelkonsole (1) abstützen,
wobei die Mittelkonsole (1) ein Freigabeelement (10) aufweist, wobei das Freigabeelement (10) herausnehmbar in dem Innenraum der Mittelkonsole (1) im Bereich des Bodens (2) so eingesetzt ist, dass das Freigabeelement (10) die Durchbrüche (5) in der vorderen Wand (3) und in der hinteren Wand (4) freigibt.

2. Mittelkonsole nach Anspruch 1, **dadurch gekennzeichnet, dass** die Abstützungen (12) als Luftleitrippen ausgebildet sind.

3. Mittelkonsole nach den Ansprüchen 1 oder 2, **dadurch gekennzeichnet, dass** das Freigabeelement (10) im Einkomponenten-, Zweikomponentenverfahren oder als Monocompound hergestellt ist.

## Claims

1. A centre console (1) for a motor vehicle, having a base (2), a front wall (3) and a rear wall (4), wherein provided in the front wall (3) and in the rear wall (4), in each case in the region near the base, is an opening (5) which can be connected to an air duct for ventilating a rear region of the motor vehicle,
wherein the release member (10) is configured as a freely formed support surface or as a substantially flat plate which is located at least at the height of the upper edge of the openings (5), so that formed under the release member (10) is an air conducting channel (11) which interconnects the openings (5) in the front and rear walls (3, 4) of the centre console (1),
wherein the release member (10) is supported on a preferably peripheral console (8) which is arranged at least at the height of the upper edge of the openings (5) in the centre console (1),
wherein provided on the underside of the release member (10) are supports (12) which are supported on the base (2) of the centre console (1),
wherein the centre console (1) has an release member (10), the release member (10) being inserted, in a removable manner, in the interior of the centre console (1) in the region of the base (2) so that the release member (10) frees the openings (5) in the front wall (3) and in the rear wall (4).

2. A centre console according to claim 1, **characterised in that** the supports (12) are configured as air guiding ribs.

3. A centre console according to claim 1 or claim 2, **characterised in that** the release member (10) is produced in the single component method, in the two-component method or as a mono compound.

## Revendications

1. Console médiane (1) destinée à un véhicule automobile comprenant un fond (2), une paroi avant (3) et une paroi arrière (4), dans laquelle, la paroi avant (3) et la paroi arrière (4) comportent chacune dans leur zone située à proximité du fond, une ouverture (5) pouvant être reliée à un conduit de ventilation pour permettre d'aérer la zone arrière du véhicule automobile,
un élément de déblocage (10) réalisé sous la forme d'une surface d'appui de formage libre ou d'une plaque essentiellement plane qui est située au moins à la hauteur du bord supérieur de l'ouverture (5), de façon à former au-dessous de l'élément de déblocage (10) un canal de ventilation (11) qui relie entre eux les ouvertures (5) réalisées dans la paroi avant et dans la paroi arrière (3, 4) de la console médiane (1), l'élément de déblocage (10) s'appuyant sur une console (8) de préférence périphérique qui est montée dans la console médiane (1) au moins à la hauteur du bord supérieur des ouvertures (5),
sur la face inférieure de l'élément de déblocage (10) étant prévus des supports (12) qui s'appuient sur le fond (2) de la console médiane (1), l'élément de déblocage (10) étant monté de façon amovible dans le volume interne de la console médiane (1) dans la zone du fond (2) de façon à libérer les perçages (5) réalisés dans la paroi avant (3) et dans la paroi arrière (4).

2. Console médiane conforme à la revendication 1,
**caractérisée en ce que**
les supports (12) sont réalisés sous la forme de nervures de guidage d'air.

3. Console médiane conforme aux revendications 1 ou 2,
**caractérisée en ce que**
l'élément de déblocage (10) est fabriqué par un procédé mono-composant ou bi-composant ou en tant que mono-composé.
